Europäisches Patentamt

European Patent Office

Office européen des brevets

(11) Publication number: **0 191 361**
**B1**

(12) EUROPEAN PATENT SPECIFICATION

(45) Date of publication of patent specification: **28.11.90**

(21) Application number: **86101142.7**

(22) Date of filing: **30.09.83**

(60) Publication number of the earlier application in accordance with Art. 76 EPC: **0 105 746**

(51) Int. Cl.⁵: **G 11 B 25/06, G 11 B 15/675, G 11 B 15/18**

(54) Apparatus for transporting tape in a cassette.

(30) Priority: **01.10.82 JP 170920/82**
**01.10.82 JP 170921/82**
**01.10.82 JP 170922/82**
**01.10.82 JP 147967/82 u**
**01.10.82 JP 147968/82 u**
**01.10.82 JP 147969/82 u**

(43) Date of publication of application:
**20.08.86 Bulletin 86/34**

(45) Publication of the grant of the patent:
**28.11.90 Bulletin 90/48**

(84) Designated Contracting States:
**DE FR GB**

(56) References cited:
**EP-A-0 044 216**
**DE-A-2 851 306**
**GB-A-2 090 459**
**US-A-4 351 498**

(73) Proprietor: **KABUSHIKI KAISHA TOSHIBA**
**72, Horikawa-cho Saiwai-ku**
**Kawasaki-shi Kanagawa-ken 210 (JP)**

(72) Inventor: **Tomita, Seiji c/o Patent Division**
**Toshiba Corporation 1-1 Shibaura 1-chome**
**Minato-ku 105 (JP)**

(74) Representative: **Muir, Ian R. et al**
**HASELTINE LAKE & CO. Hazlitt House 28**
**Southampton Buildings Chancery Lane**
**London WC2A 1AT (GB)**

Courier Press, Leamington Spa, England.

## Description

This invention relates to apparatus for transporting tape in a cassette.

As prior art, there can be mentioned GB-A-2090459. GB-A-2090459 discloses apparatus having the features of the pre-characterising clause of claim 1, there being two different spring means, one pressing the cassette against the holding portions of the holder and the other pressing the cassette into the holder.

Recently, portable type cassette tape players of compact size and light in weight, utilizing a headphone, and operable in reproduction only in two-way stereo have become popular, so that a listener with a headphone can enjoy the reproduction of a tape while, for instance, rambling around the street or elsewhere. Along with such a tendency, tape players of the aforementioned type having sizes comparable with an ordinary case for storing tape cassettes are being developed.

In order to minimize the size of the tape player, it is essential to have a suitable arrangement and shape of the operating buttons or keys which operate the tape player in reproduction, rewinding and stopping operations, and to improve the tape player so as to be operable more efficiently and portable more easily.

In view of these points, the small size tape players heretobefore developed are not yet satisfactory, involving various shortcomings in their design and construction. For instance, the size of the tape players is not yet sufficiently small to be carried in a breast pocket of a shirt or elsewhere, and hence the tape player is ordinarily carried in a special holder. Thus, it is urgently required that the above described shortcomings of the conventional tape players are eliminated and the size of the tape player is further reduced to such an extent that it can be carried in a breast pocket of a shirt.

According to the present invention, there is provided apparatus for transporting tape in a tape cassette with a thickened portion, said apparatus comprising:

a housing with a cassette receiving space;

a cassette holder disposed in said cassette receiving space;

spring means coupled to said housing and disposed in said tape cassette receiving space for engaging said tape cassette when said tape cassette is in said cassette holder; and

means disposed in said housing, for moving said tape, characterised in that:

said spring means is arranged to engage an edge of the thickened portion of the tape cassette to provide a force urging the cassette into the holder to resist withdrawal of said cassette from the cassette holder.

Figure 1 is a perspective view of a tape player;

Figure 2 is a perspective view showing the tape player shown in Figure 1 and a tape cassette to be loaded;

Figure 3 is a perspective view of the tape player shown in Figure 1 loaded with a tape cassette;

Figure 4 is a side view, partly in section, of the tape player in a loaded state as shown in Figure 3;

Figure 5 is a perspective view showing a state wherein a tuner pack is loaded in the tape player shown in Figure 1;

Figure 6 is a perspective view showing a mechanism portion used in the tape player shown in Figure 1;

Figure 7 is a perspective view showing a state wherein a tape cassette is inserted into a cassette holder;

Figures 8(a) and 8(b) are cross-sectional views showing operational states of a driving mechanism used in the tape player shown in Figure 1;

Figure 9 is a perspective view showing a transfer drive mechanism used with the mechanism shown in Figures 8(a) and 8(b); and

Figure 10 is a cross-sectional view showing an important part of a locking mechanism of a cover plate used in the cassette tape player shown in Figure 1.

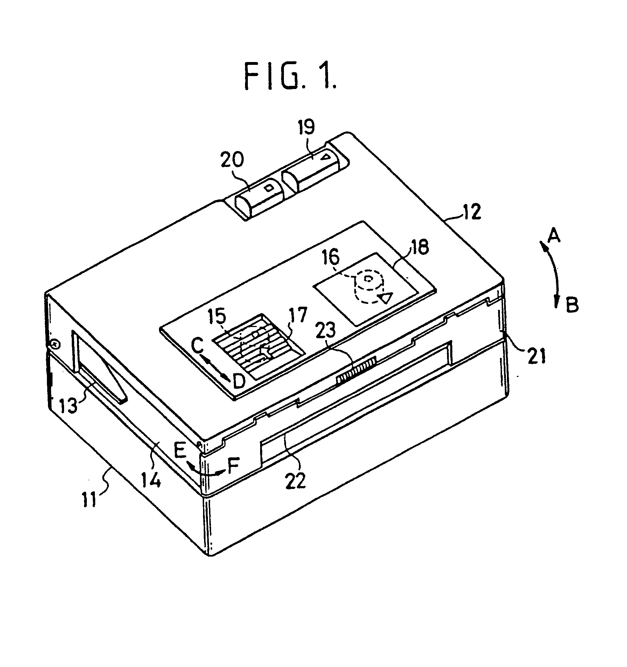

Figure 1 illustrates a general construction of a tape player constituting an embodiment of the present invention. In the embodiment, housing 11 of a box-like configuration has a size smaller than the outer periphery of a tape cassette to be loaded in housing 11. One side of housing 11 is covered by cover plate 12 of an L-shaped cross-section so that when a tape cassette is received therebetween, the peripheral portion of the tape cassette projects outwardly from housing 11 and cover plate 12. Cover plate 12 is pivotally secured to housing 11 so that it is manually swingable in the directions of arrows A and B. Cover plate 12 is lightly locked in its open position for preventing fluctuation of the cover plate 12 from the open position, while it is heavily locked in its closed position for assuring the same position as described hereinlater. Cover plate 12 is provided with tape cassette holder 13 which is movable in a relation interlinked with the opening and closing operation of cover plate 12 for holding the tape cassette in the cassette holder 13.

Housing 11 is provided with tape cassette receiving portion 14 which receives the tape cassette at a predetermined part when cover plate 12 is closed, and a mechanism (not shown) for operating the tape player as described hereinlater. A reproducing head and a pinch roller, which are described hereinlater, are also provided in housing 11 at positions opposite the tape exposing portion of the tape cassette in such a manner that the reproducing head and the pinch roller are movable in an interlinked relation with the opening and closing operation of cover plate 12.

In tape cassette receiving portion 14 of housing 11, there are provided a pair of reel supporting spindles 15 and 16 indicated by broken lines in Figure 1. Furthermore, cover locking manipulator 17 and tape rewinding manipulator 18 are provided on cover plate 12 at positions opposite reel supporting spindles 15 and 16 either one of which is operable as a tape winding spindle depending on whether the tape player is operated in a tape reproducing mode or a tape rewinding mode. Cover locking manipulator 17 is operable in the direction of arrow C, thereby unlocking cover plate 12 as described hereinlater. On the other hand, tape rewinding manipulator 18 is made operable when it is depressed downwardly.

Reproduction manipulator 19 and stop manipulator 20, both in the form of buttons, are provided on one side of cover plate 12 at positions spaced apart from a planar portion of the cassette tape when it is loaded, so that manipulators 19 and 20 can be depressed perpendicularly to the surface of cover plate 12. Front door 21 is provided on the other side of cover plate 12 opposite cassette holder 13. Front door 21 is substantially flat having cut-away portion 22 at an intermediate position, and is coupled with cover plate 12 so that front door 21 is swingable in the directions of arrows E and F. Torsion spring 23 is provided between cover plate 12 and front door 21 so as to urge front door 21 perpendicularly to cover plate 12. As a consequence, when cover plate 12 is closed without loading the tape cassette, front door 21 is held vertically to cover plate 12, and is interposed between cover plate 12 and housing 11 as shown in Figure 1, thus reinforcing cover plate 12 at the corresponding end thereof.

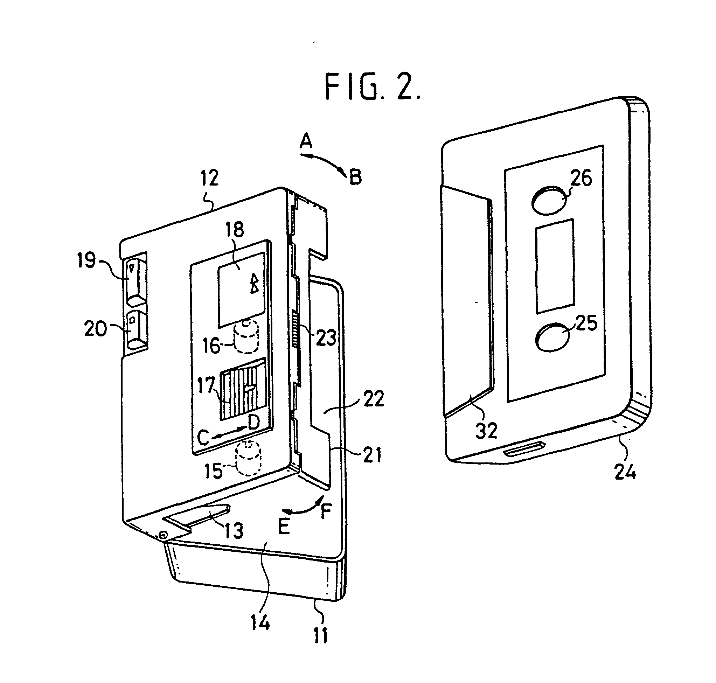

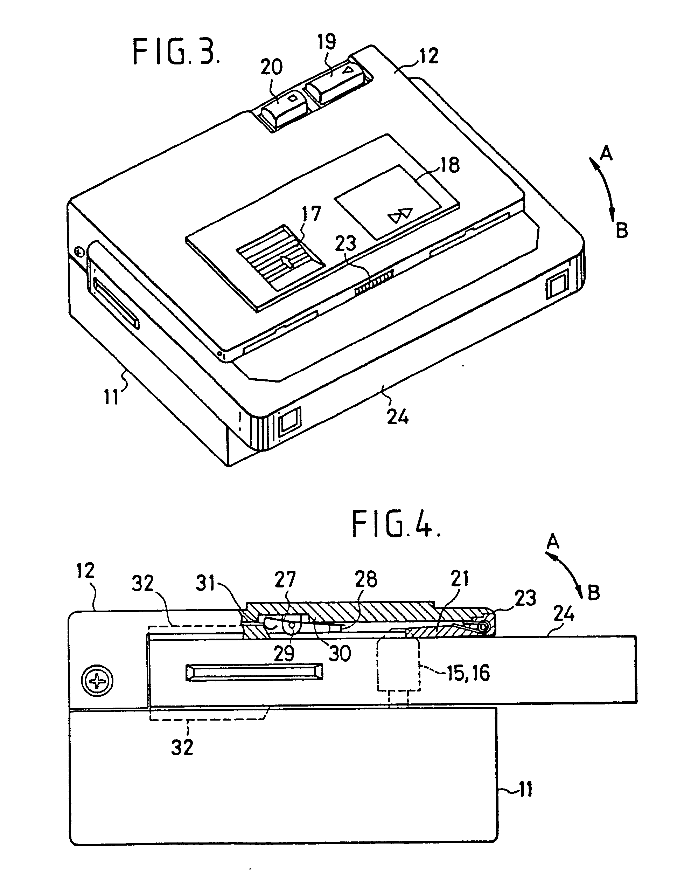

When tape cassette 24 is to be loaded, cover plate 12 is swung open as shown in Figure 2. Then the tape exposing side of tape cassette 24 is directed toward tape cassette holder 13, and the tape cassette 24 is forced into the cassette holder 13. At this time, front door 21 held by torsion spring 23 perpendicular to cover plate 12 is rotated by the leading edge of tape cassette 24 in the direction of arrow E against the resilience of torsion spring 23, so that front door 21 is brought into a position underside of cover plate 12 and overlying the upper surface of tape cassette 24. In this state, reel hub portions 25 and 26 of tape cassette 24 are brought into cut-away portion 22 of front door 21, and when cover plate 12 is closed, reel supporting spindles 15 and 16 are forced into reel hub portions 25 and 26 through cut-away portion 22. Upon closure of cover plate 12, tape cassette 24 is loaded in tape cassette receiving portion 14 in a so-called bitten manner as best illustrated in Figure 3, while a peripheral portion of tape cassette 24 is held outside the tape player.

Figure 4 illustrates the loading condition of tape cassette 24 in more detail. On the internal surface of cover plate 12 is provided leaf spring 27 having a stem portion secured to securing portion 28 of cover plate 12, while an intermediate portion of leaf spring 27 is brought into engagement with projections 29 and 30 projecting internally from cover plate 12. An end of leaf spring 27 is bent into the form of an abutting portion 31 which, when cover plate 12 is closed, abuts against a central edge of a thickened portion 32 of the tape cassette 24 away from the tape exposing edge of the same (see Figure 2). As a result, tape cassette 24 is urged by abutting end portion 31 of leaf spring 27 to ensure the engagement with reel supporting spindles 15 and 16, and also toward the hereinlater described reproducing head of the tape player. That is, tape cassette 24 is firmly held in its loaded position under the resilience of leaf spring 27.

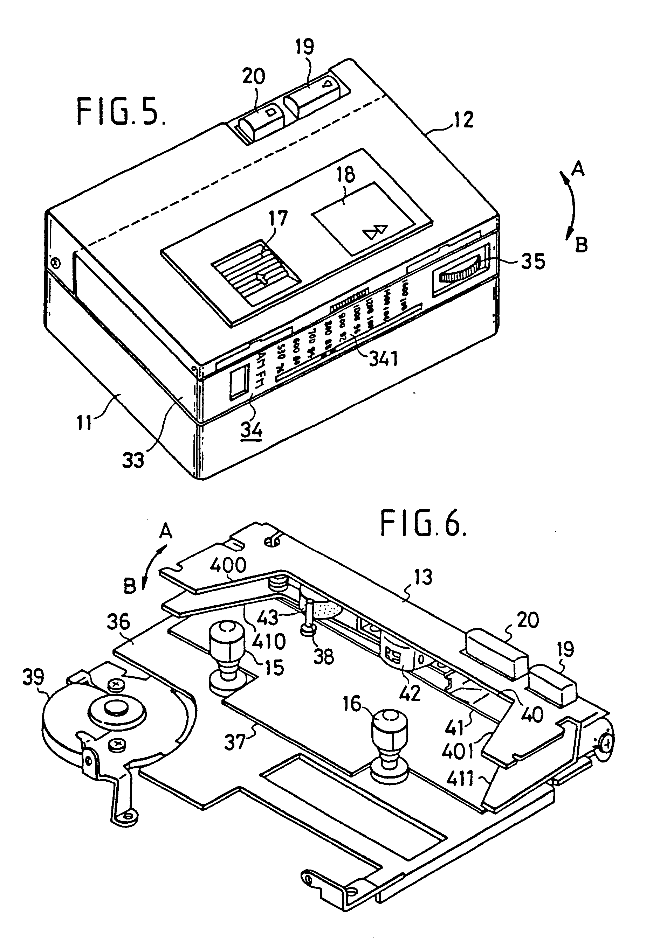

Figure 5 illustrates the tape player wherein radio tuner pack 33 is inserted in the tape player instead of tape cassette 24. In this manner, not only the playing or the reproduction of tape cassettes but also the reception of radio broadcasts can be achieved with the aid of radio tuner pack 33. Radio tuner pack 33 comprises a tuner circuit for receiving a radio wave, detecting and amplifying audio frequency signals, and a pack encasing the tuner circuit. The peripheral measurements of radio tuner pack 33 are made equal to those of housing 11. When a desired broadcasting station is selected, tuning dial 35 of control portion 34 inclusive of display portion 341 is manipulated. The output of the tuner circuit is introduced through connection terminals (not shown) into a main amplifier circuit of the tape player, and the amplifier output is delivered to the headphones (not shown). Since control portion 34 of radio tuner pack 33 is exposed outside in the closed state of cover plate 12, the operation of the control portion 34 can be performed without opening cover plate 12.

As is apparent from the above description, control portion 34 is provided on one side of radio tuner pack 33 so as to be operable from outside, and since radio tuner pack 33 is made with a configuration substantially equal to that of housing 11, control portion 34 of radio tuner pack 33 loaded in the tape player is exposed to the outside between housing 11 and cover plate 12, and the manipulation from outside of control portion 34 is thereby made possible. Because of the above described arrangement, there is no necessity for providing another control portion for radio tuner pack 33 separately in the tape player, and the construction of the tape player is thereby much simplified and the size of tape player is substantially reduced.

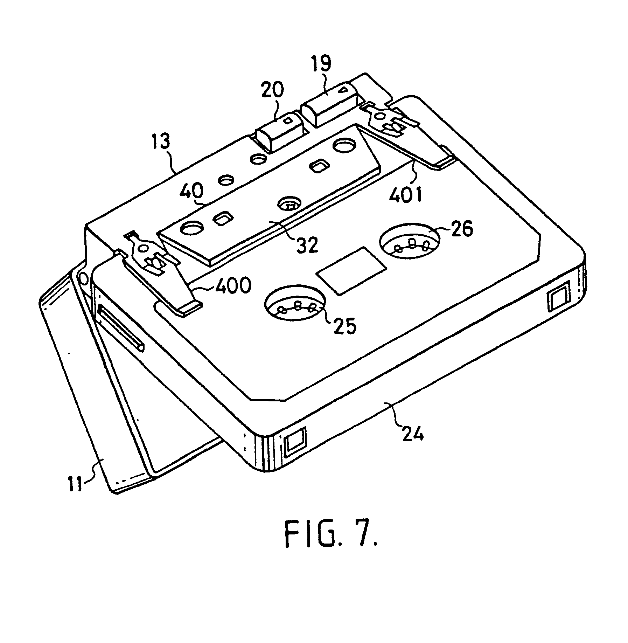

Figure 6 illustrates the hereinbefore mentioned tape player operating mechanism and cassette holder 13. In the drawing, the tape player operating mechanism is provided on main chassis 36. Reel supporting spindles 15 and 16 project upward from main chassis 36. A substantially planar shading plate 37 is extended in parallel with main chassis 36 so as to cover a hereinafter described group of gears constituting a driving mechanism of reel supporting spindles 15 and 16. On main chassis 36, there are further provided capstan 38 operable as a rotating shaft for a hereinafter described flywheel, and electric motor 39 for rotating reel supporting spindles 15 and 16. The aforementioned cassette holder 13 is secured to one side edge of main chassis 36 so that cassette holder 13 is swingable in the directions of arrows A and B. Cassette holder 13 is bent into the form of a channel shaped cross-section having upper and lower planar portions between which tape cassette 24 (see Figure 2) is squeezed in the direction of its thickness. Corresponding with thickened portion 32 of tape cassette 24 (see Figure 2), cut-away portions 40 and 41 are formed intermediate the upper and lower planar portions of the cassette holder 13. At both ends of cut-away portions 40 and 41, there are provided inclined portions 400, 401 and 410, 411 extending laterally outwardly from the bottoms of cut-away portions 40 and 41. When tape cassette 24 is inserted in cassette holder 13 as shown in Figure 7, the lateral ends of thickened portion 32 of tape cassette 24 are guided by inclined portions 400, 401, 411 of cut-away portions 40 and 41 so that the tape cassette 24 is finally held at a position where the lateral ends of thickened portion 32 on the tape exposing side of the tape cassette 24 abut against the bottoms of the inclined portions of the cut-away portions 40 and 41.

Since cut-away portions 40 and 41 having inclined portions 400, 401 and 410, 411 are provided in the tape cassette holder 13 at positions corresponding to thickened portion 32 of tape cassette 24 as described above, tape cassette 24 inserted into cassette holder 13 is guided by the inclined portions 400, 401 and 410, 411 with the thickened portion 32 held between the inclined portions 400, 401 and 410, 411, so that the tape cassette 24 is firmly held at its final position defined by the bottom portions of the cut-away portions 40 and 41 of cassette holder 13.

Referring again to Figure 6, reproducing head 42 and pinch roller 43 contactable with capstan 38 are provided within the bottom portion of the channel shaped cassette holder 13. Furthermore, reproduction manipulator 19 and stop manipulator 20 are supported by the cassette holder 13. When cover plate 12 (see Figure 3) is placed on cassette holder 13, reproduction and stop manipulators 19 and 20 projecting upward through cover plate 12 can be manipulated from outside the cover plate 12. When cover plate 12 is opened, the cassette holder 13 interlinked with cover plate 12 is rotated in the direction of arrow A into the opened state. In this case, reproduction and stop manipulators 19 and 20, reproducing head 42, and pinch roller 43 are moved together with the cassette holder 13.

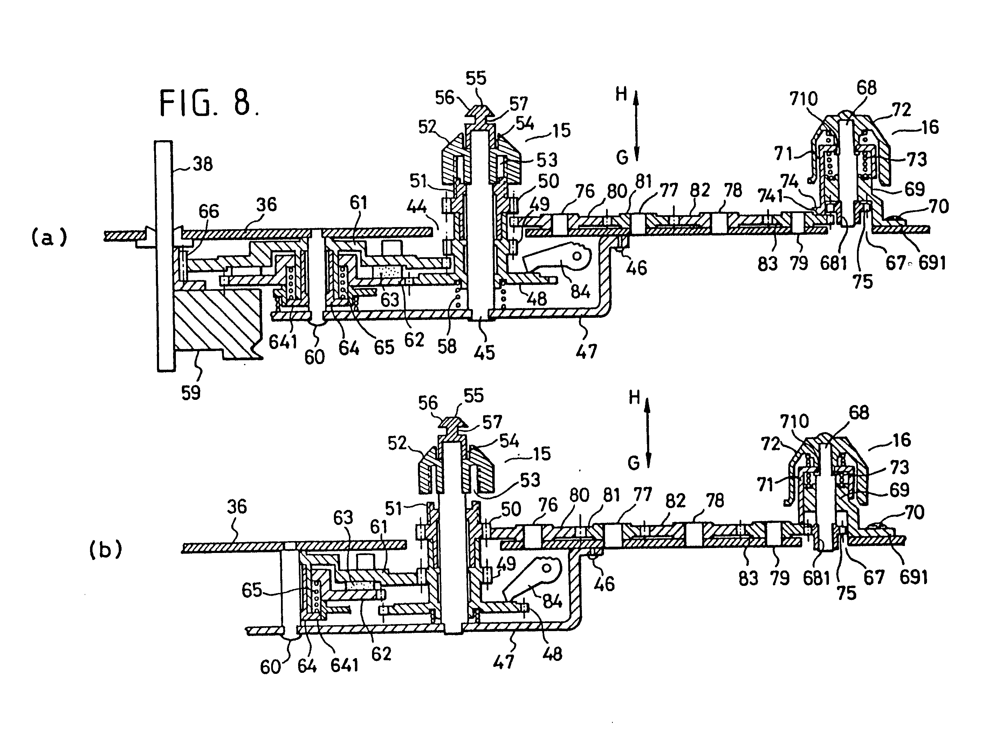

Figures 8(a) and 8(b) illustrate in detail the driving mechanism of the tape player operating in the reproducing and rewinding states, respectively. Reel supporting spindles 15 and 16, either one of which is operable as a tape winding spindle depending on the operating mode of the tape player, are arranged to project through main chassis 36. As shown in Figure 8(a), reel supporting spindle 15, that is operable as a tape winding spindle in the reproduction mode of the tape player, projects upward through opening 44 formed in a part of main chassis 36. Shaft 45 projecting through opening 44 has a base portion fixedly supported by supporting member 47 which extends parallel to main chassis 36 and one end of which is secured to main chassis 36 by screw 46. First, second and third gears 48, 49 and 50 arranged vertically and combined into an integral piece are mounted on shaft 45 at a portion passing through opening 44 in a manner freely rotatable around shaft 45 and freely slidable therealong in the directions of arrows H and G. Among these gears, third gear 50 at the top is provided with an engaging portion 51 projecting upwardly from the upper surface thereof. Additionally, shaft 45 has a reduced diameter portion at a part thereof projecting upwardly from the third gear 50, and reel cap 52, engageable with the reel hub of cassette tape 24, is mounted freely rotatably on this reduced diameter portion of the shaft 45. Reel cap 52 is provided on the lower surface with recess 53 engageable with engaging portion 51 projecting from third gear 50, and on the upper surface of reel cap 52, there is provided recess 54 surrounding shaft 45. That is, the reduced diameter portion of shaft 45 projects upward from recess 54, and locking member 55 described hereinafter in more detail is fixedly mounted on the projecting portion of shaft 45. Flange portion 56 having peripheral surface 561 tapered downward toward main chassis 36 is provided at the top of locking member 55, and locking groove 57 is formed around the lower part of tapered surface 561. Coil spring 58 is inserted between the downward surface of first gear 48 and supporting member 47, so that coil spring 58 urges first, second and third gears 48, 49 and 50 in the direction H.

Also, another shaft 60 is fixedly mounted on main chassis 36 at a position intermediate a flywheel 59, supported by capstan 38, and the reel supporting spindle 15. Fourth gear 61 having a larger diameter and fifth gear 62 having a smaller diameter are mounted on shaft 60 so that these are freely rotatable, respectively. Annular friction member 63 is interposed between fourth and fifth gears 61 and 62. Fixed member 64 of a substantially cylindrical configuration and having flange portion 641 at the lower end, is fixedly mounted on a lower part of shaft 60 as viewed in Figure 8(a). By means of coil spring 65 inserted between flange portion 641 of fixed member 64 and fifth gear 62, fifth gear 62 is urged to fourth gear 61 through friction member 63. That is, fourth gear 61 is interlinked with fifth gear 62 through the friction member 63.

Furthermore, fourth gear 61, meshing with gear 66 and cooperating with flywheel 59, is positioned between first gear 48 and second gear 49 both provided for reel supporting spindle 15. When first, second and third gears 48, 49 and 50 are shifted in the direction G, fourth gear 61 meshes with second gear 49. In the reproducing state of the tape player, however, fifth gear 62 is engaged with first gear 48, provided for reel supporting spindle 15, and when first, second and third gears 48, 49 and 50 are shifted as described above in the direction G (tape rewinding state), fifth gear 62 is disengaged from first gear 48.

On the other hand, reel supporting spindle 16, operable as a tape winding spindle in the rewinding mode of operation, projects upward through another opening 67 formed in main chassis 36. Shaft 68 is rotatably provided upwardly from main chassis 36 and substantially in alignment with the central part of opening 67. The middle part of shaft 68 is supported by a shaft supporting member 69 of a substantially cylindrical configuration having at a lower part thereof projecting portion 691 which is secured to the main chassis 36 by a screw 70. Projecting upward from shaft supporting member 69, there is provided a reduced diameter portion of shaft 68. Locking member 71 of generally cylindrical configuration and having a bottom wall provided with throughhole 710 is firstly mounted on the reduced diameter portion of shaft 68, and then reel cap 72 for tape rewinding use is forcibly mounted on the top of the reduced diameter portion so that reel cap 72 is rotated integrally with shaft 68, while locking member 71 is left free from the rotation of shaft 68. Coil spring 73 is inserted between the upper end of shaft supporting member 69 and the bottom wall of locking member 71. Coil spring 73 urges shaft 68 in the direction H through locking member 71 and reel cap 72. Locking member 71 has, at a lower end thereof, a first engaging portion 74 having a tapered part 741 tapering outwardly upward from the lower end of locking member 71. The periphery of first engaging portion 74 is made larger than the diameter of opening 67 formed in main chassis 36.

Shaft 68 is further provided with reduced diameter portion 681 projecting downwardly, as viewed in the drawing, from shaft supporting member 69. Sixth gear 75 of a small diameter is fixedly mounted on reduced diameter portion 681, such that gear 75 can be rotated and shifted integrally with shaft 68.

On a part of main chassis 36 extending between reel supporting spindles 15 and 16, there are provided shafts 76, 77, 78 and 79 fixedly mounted on main chassis 36. Seventh, eighth, ninth and tenth gears 80, 81, 82 and 83 are rotatably mounted on shafts 76, 77, 78 and 79. In the reproducing mode of operation, seventh gear 80 adjacent reel supporting spindle 15 is placed between second gear 49 and third gear 50. However, when rewinding manipulator 18 (see Figure 1) is depressed (shifting the operating to the rewinding mode), seventh gear 80 is brought into engagement with third gear 50 under the action of rewinding operation actuating member 84 which depresses first gear 48 in the direction G in Figure 8(b). Furthermore, tenth gear 83 which has been located below sixth gear 75 in reel supporting spindle 16 during the reproducing operation is brought into engagement with sixth gear 75 as shown in Figure 8(b) upon depression of rewinding manipulator 18 (see Figure 1).

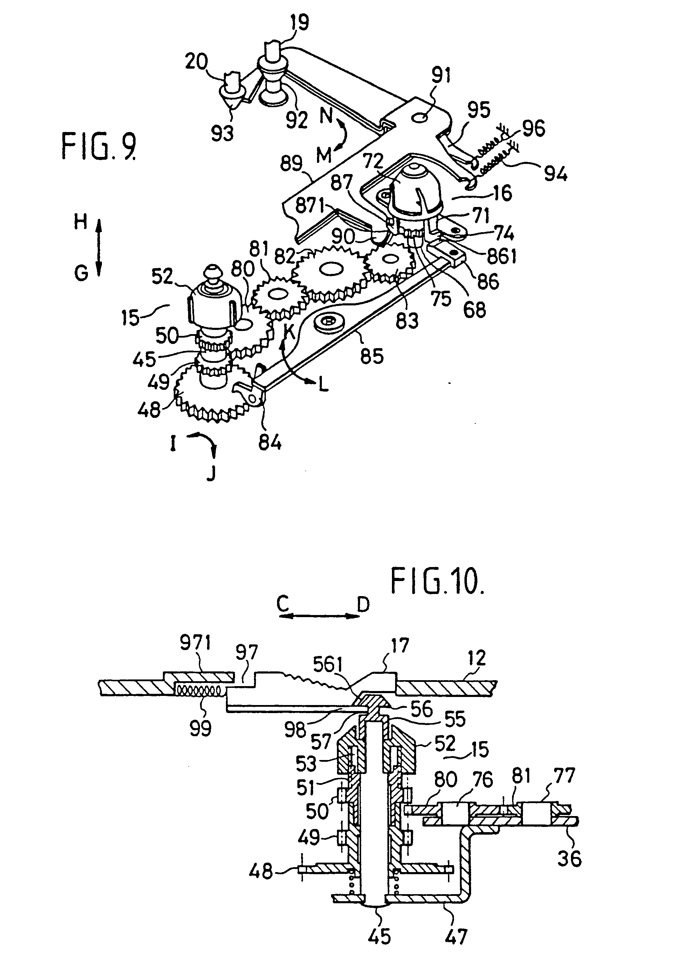

Figure 9 illustrates a transfer mechanism of the operational mode used for controlling the above described tape driving system. The aforementioned tape rewinding actuation member 84 is arranged to be rotatable in the directions of arrows I and J relative to main chassis 36. Tape rewinding actuation member 84 is brought into engagement with one end of tape rewinding drive member 85, a middle part of which is pivotally secured to main chassis 36. The other end of rewinding drive member 85 is formed into driving portion 86 having tapered part 861. Tapered part 861 engages with tapered part 741 of first engaging portion 74 of locking member 71 on reel supporting spindle 16. When tape rewinding manipulator 18 (in Figure 1) is depressed, first engaging portion 74 of locking member 71 urges driving portion 86 of tape rewinding drive member 85 to rotate the same in the direction of arrow K. Thus the first mentioned end of tape rewinding drive member 85 drives rewinding actuation member 84 in the direction I, and urges first gear 48 in spindle 15 in the direction G. As a result, first, second and third gears 48, 49 and 50 integrally formed are shifted in the direction G relative to shaft 45 against the force of coil spring 58, thereby bringing third gear 50 and second gear 49 into engagement with seventh gear 80 and fourth gear 61, respectively. Sixth gear 75 fixed to shaft 68 is brought into engagement with tenth gear 83 when rewinding manipulator 18 is depressed.

As shown in Figure 9, locking member 71 in reel supporting spindle 16 is provided with second engaging portion 87 having tapered part 871 at a position opposite to that of first engaging portion 74. Second engaging portion 87 is brought into engagement with engaging portion 90 formed on an end of locking plate 89 when reel supporting spindle 16 is depressed. Locking plate 89 is horizontally swingable around vertically disposed pivot pin 91 projecting from main chassis 36. Another end of locking plate 89 engages with driving portions 92 and 93 integrally formed with reproduction and stop manipulators 19 and 20, respectively.

When reproduction manipulator 19 is depressed, driving portion 92 of reproduction manipulator 19 rotates locking plate 89 in the direction of arrow M against the force of coil spring 94, and is locked in the depressed position by the end of locking plate 89. However, when stop manipulator 20 is depressed in this state, driving portion 93 of stop manipulator 20 rotates locking plate 89 in the direction M in excess of the locking position, thus unlocking driving portion 92 of reproduction manipulator 19. Switch slider 95 is further provided on the lower surface of locking plate 89. In response to the depression of reproduction manipulator 19, switch slider 95 on locking plate 89 turns ON a power switch (not shown) provided for operation electric motor 39 (see Figure 6) against the force of coil spring 96, so that electric motor 39 (see Figure 6) is thereby rotated in a predetermined condition. When stop manipulator 20 is operated, locking plate 89 and switch slider 95 are brought into their original positions.

With the above described construction, when reproduction manipulator 19 is depressed to operate the tape player in the reproduction mode, reproducing head 42 and pinch roller 43 (in Figure 6) are shifted to their operating positions where reproducing head 42 abuts the magnetic tape at the tape exposing side of tape cassette 24, while pinch roller 43 is urged to capstan 38 with interposition of the magnetic tape. Furthermore, locking plate 89 and switch slider 95 are rotated against the force of coil springs 94 and 96 in the direction M as shown in Figure 9 in response to the depression of reproduction manipulator 19 which is locked in the depressed position by locking plate 89. At this time, switch slider 95 turns ON the power switch to operate electric motor 39 (see Figure 6).

Electric motor 39 drives flywheel 59 in Figure 8(a). The driving force of electric motor 39 is further transmitted through gear 66 rotated together with flywheel 59 to fourth and fifth gears 61 and 62, among which fifth gear 62 drives first gear 48. Since engaging portion 51 of third gear 50 is engaging with recess 53 of reel cap 52, the torque from first gear 48 is transmitted to reel cap 52 of reel supporting spindle 15, thus enabling the reproducing operation of the tape player to be carried out.

In a case where tape rewinding manipulator 18 is depressed, reel cap 72 on reel supporting spindle 16 is thereby depressed downwardly as viewed in Figure 8(b), and locking member 71 is shifted against the force of coil spring 73 in the direction G. Second engaging portion 87 of locking member 71 activates switch slider 95 so as to turn ON the power switch and to operate electric motor 39 (see Figure 6). Simultaneously, second engaging portion 87 of locking member 71 engages with engaging portion 90 of locking plate 89, thereby maintaining locking plate 89 in its operating position. By the depression of reel cap 72 of reel supporting spindle 16, shaft 68 and sixth gear 75 are moved integrally in the direction G, so that sixth gear 75 is brought into engagement with tenth gear 83. At the same time, first engaging portion 74 of locking member 71 rotates tape rewinding drive member 85 and tape operation actuating member 84 as described hereinbefore, thereby depressing first gear 48 in the direction G. Thus, first, second and third gears 48, 49 and 50 are moved integrally in the direction G relative to shaft 45, so that the engagement between engaging portion 51 projecting from third gear 50 and recess 53 of reel cap 52 is released. As a result, the torque used for rotating flywheel 59 is transmitted successively from gear 66 through fourth gear 61, second gear 49, third gear 50, seventh gear 80, eighth gear 81, ninth gear 82, tenth gear 83 to sixth gear 75, so that reel cap 72 of reel supporting spindle 16 is rotated at a rotating speed faster than that of the reproduction operation.

In a case where a quick shift operation of the tape player is required, a quick shift manipulator (not shown) is operated electrically to disconnect a governor circuit (not shown) from electric motor 39 thereby to rotate the same at a speed much higher than the reproduction speed.

Since one of reel supporting spindles 15 and 16 supporting reel hubs 25 and 26 of the cassette tape 24, which is operable as a tape winding spindle during the tape rewinding operation, is thus utilized in connection with the tape rewinding manipulator to be depressed in its axial direction, wasteful parts in the construction can be eliminated, and reliable operation of the tape player is assured. Furthermore, since the transfer and driving operations in the tape rewinding mode of operation are carried out by the tape rewinding drive members cooperating with reel supporting spindles 15 and 16, the construction of the tape player is substantially simplified, and further minimization of the tape player is made possible.

Figure 10 illustrates in detail the locking mechanism for locking cover plate 12 of the tape player in its closed position. As is described hereinbefore, locking member 55 is secured to the upper end of shaft 45 of the reproducing side reel supporting spindle 15. On the other hand, through-hole 97 of a substantially rectangular configuration is formed through cover plate 12 at a position opposite to locking member 55. In through-hole 97, the aforementioned cover locking manipulator 17 is provided to be slidable in the directions of arrows C and D. The underside of cover locking manipulator 17 is provided with locking portion 98 which projects from cover locking manipulator 17 to a position opposite locking groove 57 formed in locking member 55. One end of coil spring 99 is secured to an end of cover locking manipulator 17, while the other end of coil spring 99 is secured to step portion 971 formed at the other end of through-hole 97. Because of coil spring 99, cover locking manipulator 17 is urged in the direction D relative to cover plate 12.

In a case when cover plate 12 is opened from its closed state, cover locking manipulator 17 is shifted in the direction C against the force of coil spring 99. Thus, locking portion 98 projecting from cover locking manipulator 17 retracts from locking groove 57 of locking member 55 in the direction C, so that cover plate 12 is released out of the locked state. In this case, it would be advantageous that a spring member is further provided to urge cover plate 12 into its opened position relative to housing 11.

When it is desired to close cover plate 12 from its opened state, cover plate 12 is simply forced into the closed state. In this manner, the locking portion of cover locking manipulator 17 is shifted along tapered portion 561 of locking member 55 secured to reel supporting spindle 15 so as to be brought into engagement with locking groove 57 formed in locking member 55.

Since it is so constructed that locking member 55 secured to the upper end of shaft 45 of reel supporting spindle 15 is directly engageable with locking portion 98 of cover locking manipulator 17, the size of the tape player of the present invention can be reduced substantially.

Although it has been so described that the size of housing 11 of the tape player of the present invention is selected to be smaller than the outer periphery of tape cassette 24, so that the periphery of tape cassette 24 projects outwardly when it is loaded into the tape player, the invention is not necessarily limited to such a construction, and the size of housing 11 may otherwise be so selected that it is substantially equal to that of tape cassette 24, and at least one end of tape cassette 24 is exposed to the outside when tape cassette 24 is loaded into the tape player.

As described hereinabove, according to the embodiment of the invention, a tape player of a simple construction and of a reduced size can be provided.

**Claims**

1. Apparatus for transporting tape in a tape cassette (24) with a thickened portion (32), said apparatus comprising:

a housing (11) with a cassette receiving space (14);

a cassette holder (13) disposed in said cassette receiving space (14);

spring means (27) coupled to said housing and disposed in said tape cassette receiving space for engaging tape cassette (24) when said tape cassette (24) is in said cassette holder (13); and

means (62), disposed in said housing (11), for moving said tape, characterised in that:

said spring means (27) is arranged to engage an edge of the thickened portion (32) of the tape cassette (24) to provide a force urging the cassette into the holder to resist withdrawal of said cassette (24) from the cassette holder.

2. Apparatus according to claim 1, characterised in that said housing (11) includes a cover (12) pivotably attached to the remainder of said housing, said remainder of said housing and said cover defining said cassette receiving space (14) and said spring means being disposed on said cover.

3. Apparatus according to claim 1 or 2 characterised in that it is suitable for use with a tape cassette (24) the thickened portion (32) of which has 1) a first edge which in use of the apparatus is proximate the side of said tape cassette which exposes said tape and 2) a second edge opposite said first edge, said an edge being said second edge.

4. Apparatus according to any preceding claim, characterised in that said spring means (27) includes a curved portion for engaging said thickened portion edge.

5. Apparatus according to any preceding claim, characterised in that said cassette holder (13) includes a slot for receiving said tape cassette (24), said spring means (27) co-operating with said slot for holding said tape cassette in said cassette holder.

6. Apparatus according to any preceding claim, characterised in that said cassette holder (13) includes means (40, 41, 400, 410, 411) adapted for co-operation with said thickened portion (32) of said tape cassette (24), for positioning said cassette tape in said cassette holder in a predetermined manner.

7. Apparatus according to claim 6, characterised in that said positioning means (40, 41, 400, 401, 411) includes flange portions (400, 401, 410, 411) which lie along said tape cassette (24) when said tape cassette is in said cassette holder (13), said flange portions having edges which op-operate with edges of said thickened portion (32) of said tape cassette to align said tape cassette.

8. Apparatus according to claim 7, characterised in that said edges of said flange portions (400, 401, 410, 411) are flared for co-operating with edges of said thickened portion (32) of said tape cassette (24) for guiding said tape cassette to said predetermined position.

9. Apparatus according to claim 7 or 8, characterised in that it is suitable for use with a tape cassette (24), the thickened portion (32) of which has an edge proximate a side of said tape cassette at which said tape is exposed, said positioning means (40, 41, 400, 401, 410, 411) including means defining an edge between said flange portions which abuts this edge of said thickened portion when said tape cassette is in said predetermined position.

10. Apparatus according to claim 7, characterised in that it is suitable for use with a tape cassette (24), the thickened portion (32) of which is disposed on opposite sides of said tape cassette, said positioning means (40, 41, 400, 401, 410, 411) including flange portions (400, 401, 410, 411) for lying along opposite sides of said tape cassette.

11. Apparatus according to any preceding claim, characterised in that it includes a spindle (15) attached to said housing (11) and having a rotatable portion (52) for co-operating with a reel of said tape cassette (24), said driving means (62) being arranged for driving said rotatable portion of said spindle.

12. Apparatus according to claim 11, characterised in that it further includes:

moving and actuating means (16, 75), adapted for co-operation with another reel of said tape cassette, for rotating said other reel, at least a first portion (75) of said moving and actuating means being rotatable about an axis and at least a second portion (16) of said moving and actuating means being slidable along said axis.

means (83) for rotating said first portion; and

means (59, 48, 49, 50, 66, 62, 62, 80, 81, 82) for causing said rotating means to rotate said first portion when said second portion is slid in one direction.

13. Apparatus according to any preceding claim, characterised in that:

said housing (11) has dimensions such that a tape cassette (24) in said cassette receiving space (14) extends beyond said housing in at least one direction.

14. Apparatus according to claim 13 including:

means, disposed in said housing, for generating electrical signals related to data on said tape;

tuner cassette means (33), disposable in said tape receiving space of said housing and having dimensions such that said tuner cassette means does not extend beyond said housing, for receiving radio waves and generating electrical signals related to selected waves; and

means for interconnecting said tuner cassette means and said generating means.

15. Apparatus according to claim 14, characterised in that said tuner cassette means (33) includes control means (34) disposable in said cassette receiving space (14) and accessible when said tuner cassette means is disposed in said cassette receiving space.

16. Apparatus according to claim 12 or any one of claims 13 to 15 as dependent on claim 12, characterised in that said means (62) for driving said rotatable portion (52) of said spindle (15), said moving and actuating means (16, 75), said means (83) for rotating said first portion (75) and said causing means (59, 48, 49, 50, 66, 62, 61, 80, 82) are such that said spindle may be rotated selectively in a direction opposite to the direction in which said rotating means (83) rotates said first portion.

17. Apparatus according to claim 16, characterised in that said first portion rotating means, causing means and spindle rotating means comprise:

a flywheel (59);

first energy transferring means (66, 61, 63, 62, 48) for selectively transferring energy from said flywheel to said spindle (15); and

second energy transferring means (66, 61, 49, 50, 81, 82) for selectively transferring energy from said flywheel to said first portion (75).

18. Apparatus according to claim 17, characterised in that said first and second energy transferring means comprise:

first, second and third concentrically arranged gears (48, 49, 50) fixed with respect to each other;

a fourth gear (66) engaged with said flywheel (59);

third means (61, 63, 62) for transferring energy from said fourth gear to said first gear (48) and from said first gear to said spindle (15) during one mode of operation of said apparatus; and

fourth means (61, 80, 81, 82) for transferring energy from said fourth gear to said second gear (49) and from said third gear (50) to said first portion (75) of said moving and actuating means when said second portion (16) if said moving and actuating means is slid in said one direction.

19. Apparatus according to claim 18, characterised in that said first, second and third gears (40, 49, 50) are concentric with said spindle (15) and said third means (61, 63, 62), and there is provided means (84) for moving said first, second and third gears axially to engage said spindle.

20. Apparatus according to claim 18 or 19, characterised in that said third means comprises:

a fifth gear (62) engageable with said first gear (48); and

means (61, 63) for transferring a predetermined amount fo force from said fourth gear (66) to said fifth gear.

21. Apparatus according to claim 2 or any of claims 3 to 20 as dependent on claim 2, characterised in that said cover (12) is pivotably attached along a first edge to said housing (11) and the apparatus further includes:

a door (21) pivotably attached to a second edge of said cover opposite said first edge; and

means (23) for biasing said door to extend across an opening to said cassette receiving space of said housing, said door being pivoted from across said opening when a tape cassette (24) is inserted into said cassette receiving space.

22. Apparatus according to claim 20, characterised in that there is a further spindle (16) for co-operating with another reel of said tape cassette (24), said spindles being suitable for co-operating with two holes (25, 26) in said tape cassette, said door (21) including a cut out area (22) for avoiding said spindles when said door is pivoted by said tape cassette being inserted.

**Patentansprüche**

1. Vorrichtung für den Bandtransport in einer einen verdickten Bereich (32) aufweisenden Bandkassette (24),

mit einem Gehäuse (11) mit einem Kassetten-Aufnahmeraum (14),

mit einem in dem Kassetten-Aufnahmeraum (14) angeordneten Kassettenhalter (13),

mit einer mit dem Gehäuse verbundenen Federeinrichtung (27), die in dem Kassetten-Aufnahmeraum angeordnet ist und an der Bandkassette (24) angreift, wenn diese sich in dem Kassettenhalter (13) befindet,

sowie mit in dem Gehäuse (11) angeordneten Mitteln (62) zum Bewegen des Bandes, dadurch gekennzeichnet,

daß die Federeinrichtung (27) so angeordnet ist, daß sie an einer Kante des verdickten Bereichs (32) der Bandkassette (24) in der Weise angreift, daß sie eine Kraft ausübt, die die Bandkassette in den Kassettenhalter drückt, so daß einem Herausnehmen der Kassette (24) aus dem Kassettenhalter Widerstand entgegenwirkt.

2. Vorrichtung nach Anspruch 1, dadurch gekennzeichnet, daß das Gehäuse (11) einen Deckel (12) besitzt, der mit dem übrigen Teil des Gehäuses schwenkbar verbunden ist, wobei der übrige Teil des Gehäuses und der Deckel den Kassetten-Aufnahmeraum (14) begrenzen und wobei die Federeinrichtung an dem Deckel angeordnet ist.

3. Vorrichtung nach Anspruch 1 oder 2, dadurch gekennzeichnet, daß sie für die Verwendung mit einer Bandkassette (24) geeignet ist, deren verdickter Bereich (32) 1) eine erste Kante aufweist, die im Betrieb der Vorrichtung derjenigen Seite der Bandkassette benachbart ist, an der das Band freiliegt, und 2) eine zweite Kante, die der ersten Kante gegenüberliegt und die die genannte eine Kante darstellt.

4. Vorrichtung nach einem der vorhergehenden Ansprüche, dadurch gekennzeichnet, daß die Federeinrichtung (27) einen gekrümmten Abschnitt aufweist, mit dem sie an der Kante des verdickten Bereichs angreift.

5. Vorrichtung nach einem der vorhergehenden Ansprüche, dadurch gekennzeichnet, daß der Kassettenhalter (13) einen Schlitz zur Aufnahme der Bandkassette (24) besitzt und daß die Federeinrichtung (27) mit diesem Schlitz zusammenwirkt, um die Bandkassette in dem Kassettenhalter zu halten.

6. Vorrichtung nach einem der vorhergehenden Ansprüche, dadurch gekennzeichnet, daß der Kassettenhalter (13) Mittel (40, 41, 400, 410, 411) aufweist, die an das Zusammenwirken mit dem verdickten Bereich (32) der Bandkassette (24) derart angepaßt sind, daß sie die Bandkassette in dem Kassettenhalter in einer vorbestimmten Weise positionieren.

7. Vorrichtung nach Anspruch 6, dadurch gekennzeichnet, daß die Positionierungsmittel (40, 41, 400, 410, 411) Flanschteile (400, 401, 410, 411) umfassen, die entlang der Bandkassette (24) liegen, wenn diese sich in dem Kassettenhalter (13) befindet, und daß diese Flanschteile Kanten besitzen, die mit Kanten des verdickten Bereichs (32) der Bandkassette zusammenwirken, um letzteren auszurichten.

8. Vorrichtung nach Anspruch 7, dadurch gekennzeichnet, daß die Kanten der Flanschteile (400, 401, 410, 411) für das Zusammenwirken mit Kanten des verdickten Bereichs (32) der Bandkassette (24) und zum Führen der Bandkassette in die genannten vorbestimmte Position konisch erweitert sind.

9. Vorrichtung nach Anspruch 7 oder 8, dadurch gekennzeichnet, daß sie an die Verwendung an eine Bandkassette (24) angepaßt ist, deren verdickter Bereich (32) eine Kante besitzt, die einer Seite der Bandkassette benachbart ist, an der das Band freiliegt, und daß die Positionierungsmittel (40, 41, 400, 410, 411) Mittel umfassen, die eine Kante zwischen den Flanschteilen bestimmen und an dieser Kante des verdickten Bereichs zur Anlage kommen, wenn die Bandkassette sich in der genannten vorbestimmten Position befinden.

10. Vorrichtung nach Anspruch 7, dadurch gekennzeichnet, daß sie an die Verwendung an eine Bandkassette (24) angepaßt ist, deren verdickter Bereich (32) auf entgegengesetzten Seiten der Bandkassette angeordnet ist, und daß die Positionierungsmittel (40, 41, 400, 410, 411) Flanschteile (400, 401, 410, 411) umfassen, die längs entgegengesetzter Seiten der Bandkassette zu liegen bestimmt sind.

11. Vorrichtung nach einem der vorhergehenden Ansprüche, dadurch gekennzeichnet, daß an dem Gehäuse (11) ein Wickeldorn (15) angebracht ist, der einen drehbaren Abschnitt (52) für das Zusammenwirken mit einer Spule der Bandkassette (24) aufweist, und daß die Antriebsmittel (62) derart angeordnet sind, daß sie diesen drehbaren Abschnitt des Wickeldorns antreiben.

12. Vorrichtung nach Anspruch 11, dadurch gekennzeichnet, daß ferner folgende Teile vorgesehen sind:
Bewegungs- und Betätigungsmittel (16, 75) für das Zusammenwirken mit einer weiteren Spule der Bandkassette, die diese weitere Spule drehen, wobei zumindest ein erster Abschnitt (75) diese Bewegungs- und Betätigungsmittel um eine Achse drehbar ist und wenigstens ein zweiter Abschnitt (16) der Bewegungs- und Betätigungsmittel entlang dieser Achse gleiten kann,
Mittel (83) zum Drehen des ersten Abschnitts,
sowie Mittel (59, 48, 49, 50, 66, 62, 80, 81, 82), die die genannten Mittel (83) veranlassen, den ersten Abschnitt (75) zu drehen, wenn der zweite Abschnitt (16) in einer Richtung verschoben ist.

13. Vorrichtung nach einem der vorhergehenden Ansprüche, dadurch gekennzeichnet, daß die Abmessungen des Gehäuses (11) so gewählt sind, daß eine Bandkassette (24) in dem Kassetten Aufnahmeraum (14) in wenigstens einer Richtung über das Gehäuse hinausragt.

14. Vorrichtung nach Anspruch 13, gekennzeichnet durch in dem Gehäuse angeordnete Mittel zur Erzeugung von auf dem Magnetband vorhandenen Daten entsprechenden elektrischen Signalen,
eine zum Empfang von Rundfunkwellen und zur Erzeugung von ausgewählten Wellen entsprechenden elektrischen Signalen dienende Empfänger-Kassettenanordnung (33), die in dem Kassetten-Aufnahmeraum des Gehäuses angeordnet werden kann und deren Abmessungen so gewählt sind, daß sie nicht aus dem Gehäuse herausragt,
und Mittel zum Verbinden dieser Empfänger-Kassettenanordnung und der genannten Mittel zur Erzeugung elektrischer Signale.

15. Vorrichtung nach Anspruch 14, dadurch gekennzeichnet, daß die Empfänger-Kassettenanordnung (33) Einstellmittel (34) aufweist, die sich in dem Kassetten-Aufnahmeraum (14) anordnen lassen und zugänglich sind, wenn die Empfänger-Kassettenanordnung (33) sich in dem Kassetten-Aufnahmeraum befindet.

16. Vorrichtung nach Anspruch 12 oder nach einem der Ansprüche 13 bis 15, soweit von Anspruch 12 abhängig, dadurch gekennzeichnet, daß die genannten Antriebsmittel (62) für den drehbaren Abschnitt (52) des Wickeldorns (15), die Bewegungs- und Betätigungsmittel (16, 74), die Mittel (83) zum Drehen des ersten Abschnitts (75) und die Mittel (59, 48, 49, 50, 66, 62, 80, 81, 82), die das Drehen des ersten Abschnitts (75) veranlassen, wenn der zweite Abschnitt (16) in einer Richtung verschoben ist, so ausgebildet sind, daß der Wickeldorn wahlweise in einer Richtung gedreht werden kann, die der Richtung entgegengesetzt ist, in der die Mittel (83) zum Drehen des ersten Abschnitts diesen ersten Abschnitt drehen.

17. Vorrichtung nach Anspruch 16, dadurch gekennzeichnet, daß die Mittel zum Drehen des ersten Abschnitts, die Mittel, die das Drehen des ersten Abschnitts (75) veranlassen, und die Mittel zum Drehen des Wickeldorns folgende Teile umfassen:
ein Schwungrad (59),
erste Energieübertragungsmittel (66, 61, 63, 62, 48) zum wahlweisen Übertragen von Energie von dem Schwungrad auf den Wickeldorn (15),
und zweite Energieübertragungsmittel (66, 61, 49, 50, 81, 82) zum wahlweisen Übertragen von Energie von dem Schwungrad auf den genannten ersten Abschnitt (75).

18. Vorrichtung nach Anspruch 17, dadurch gekennzeichnet, daß die ersten und die zweiten Energieübertragungsmittel folgende Teile umfassen:

erste, zweite und dritte konzentrisch angeordnete Zahnräder (48, 49, 50), die fest miteinander gekoppelt sind,

ein viertes Zahnrad (66), das mit dem Schwungrad (59) kämmt,

dritte Mittel (61, 63, 62) zur Energieübertragung von dem vierten Zahnrad auf das erste Zahnrad (48) und von dem ersten Zahnrad auf den Wickeldorn (15) während einer Betriebsart der Vorrichtung,

und vierte Mittel (61, 80, 81, 82) zur Energieübertragung von dem vierten Zahnrad aus das zweiten Zahnrad (49) und von dem dritten Zahnrad (50) auf den ersten Abschnitt (75) der Bewegungs- und Betätigungsmittel, wenn der zweite Abschnitt (16) der Bewegungs- und Betätigungsmittel in der genannten einen Richtung verschoben ist.

19. Vorrichtung nach Anspruch 18, dadurch gekennzeichnet, daß das erste, zweite und dritte Zahnrad (40, 49, 50) konzentrisch zu dem Wickeldorn (15) und den dritten Mitteln (61, 63, 62) angeordnet sind und daß Mittel (84) vorgesehen sind zum axialen Bewegen des ersten, zweiten und dritten Zahnrads derart, daß Eingriff mit dem Wickeldorn hergestellt wird.

20. Vorrichtung nach Anspruch 18 oder 19, dadurch gekennzeichnet, daß die dritten Mittel folgende Teile umfassen:

ein fünftes Zahnrad (62), das mit dem ersten Zahnrad (48) in Eingriff bringbar ist,

und Mittel (61, 63) zum Übertragen von Kraft einer vorbestimmten Größe von dem vierten Zahnrad (66) auf das fünfte Zahnrad.

21. Vorrichtung nach Anspruch 2 oder nach einem der Ansprüche 3 bis 20, soweit von Anspruch 2 abhängig, dadurch gekennzeichnet, daß der Deckel (12) längs einer ersten Kante schwenkbar an dem Gehäuse (11) befestigt ist und daß die Vorrichtung ferner folgende Teile aufweist:

ein Türelement (21), das an einer der genannten ersten Kante gegenüberliegenden zweiten Kante schwenkbar an dem Deckel befestigt ist,

und Mittel (23) zum Vorspannen des Türelements in der Weise, daß es sich über eine Öffnung des Kassetten-Aufnahmeraums des Gehäuses ersteckt, wobei das Türelement beim Einsetzen einer Bandkassette in den Kassetten-Aufnahmeraum aus der Position über dieser Öffnung verschwenkt wird.

22. Vorrichtung nach Anspruch 20, dadurch gekennzeichnet, daß ein weiterer Wickeldorn (16) vorhanden ist, der mit einer weiteren Spule der Bandkassette (24) zusammenwirkt, wobei diese Wickeldorne mit zwei Öffnungen (25, 26) in der Bandkassette zusammenwirken können und wobei das Türelement (21) einen Ausschnitt (22) besitzt, um dem Wickeldornen auszuweichen, wenn es durch das Einsetzen der Bandkassette verschwenkt wird.

**Revendications**

1. Appareil pour le transport d'une bande dans une cassette à bande (24) avec une partie épaissie (32), ledit appareil comprenant:

un boîtier (11) avec un espace de réception de cassette (14);

un dispositif de maintien de cassette (13) placé dans ledit espace de réception de cassette (14);

des moyens à ressort (27) couplés audit boîtier et placés dans ledit espace de réception de la cassette à bande pour venir en prise avec lsdite cassette à bande (24) lorsque ladite cassette à bande (24) est dans ledit dispositif de maintien de cassette (13); et

des moyens (62) montés dans ledit boîtier (11) pour déplacer ladite bande, caractérisé en ce que:

lesdits moyens à ressort (27) sont prévus pour venir en prise avec un bord de la partie épaissie (32) de la cassette à bande (24) pour créer une force poussant la cassette dans le dispositif de maintien afin de résister au retrait de ladite cassette (24) du dispositif de maintien de cassette.

2. Appareil selon la revendication 1, caractérisé en ce que ledit boîtier (11) comprend un couvercle (12) articulé au reste dudit boîtier, ledit reste dudit boîtier et ledit couvercle définissant ledit espace de réception de cassette (14), et lesdits moyens à ressort étant disposés sur ledit couvercle.

3. Appareil selon la revendication 1 ou 2, caractérisé en ce qu'il est approprié pour être utilisé avec une cassette à bande (24) dont ls partie épaissie (32) présente 1) un premier bord qui lors de l'utilisation de l'appareil est proche du côté de ladite cassette à bande qui expose ladite bande et 2) un second bord opposé audit premier bord, ledit bord étant ledit second bord.

4. Appareil selon une revendication précédente quelconque, caractérisé en ce que lesdits moyens à ressort (27) comprennent une partie courbe pour venir en contact avec ledit bord de la partie épaissie.

5. Appareil selon une revendication précédente quelconque, caractérisé en ce que ledit dispositif de maintien de cassette (13) comprend une fente pour recevoir ladite cassette à bande (24), lesdits moyens à ressort (27) coopérant avec ladite fente pour maintenir ladite cassette à bande dans ledit dispositif de maintien de cassette.

6. Appareil selon une revendication précédente quelconque, caractérisé en ce que ledit dispositif de maintien de cassette (13) comprend des moyens (40, 41, 400, 410, 411) prévus pour coopérer avec ladite partie épaissie (32) de ladite cassette à bande (24) afin de mettre en place ladite cassette à bande dans ledit dispositif de maintien de cassette d'une manière déterminée à l'avance.

7. Appareil selon la revendication 6, caractérisé en ce que lesdits moyens de mise en place (40, 41, 400, 401, 411) comprennent des parties formant flancs (400, 401, 410, 411) qui se trouvent le long de ladite cassette à bande (24) lorsque ladite cassette à bande est dans ledit dispositif de maintien de cassette (13), lesdites parties formant flancs présentant des bords qui coopèrent avec des bords desdites parties épaissies (32) de ladite cassette à bande afin d'aligner ladite cassette à bande.

8. Appareil selon la revendication 7, caractérisé en ce que lesdits bords desdites parties formant flancs (400, 401, 410, 411) sont évasés pour coopérer avec des bords de ladite partie épaissie (32) de ladite cassette à bande (24) pour guider ladite cassette à bande vers ladite position déterminée à l'avance.

9. Appareil selon la revendication 7 ou 8, caractérisé en ce qu'il est approprié pour être utilisé avec une cassette à bande (24) dont la partie épaissie (32) présente un bord proche d'un côté de ladite cassette à bande au niveau duquel ladite bande est exposée, lesdits moyens de mise en place (40, 41, 400, 401, 410, 411) comprenant des moyens définissant un bord entre lesdites parties formant flancs qui vient en butée contre ce bord de lsdite partie épaissie lorsque ladite cassette à bande est dans ladite position déterminée à l'avance.

10. Appareil selon la revendication 7, caractérisé en ce qu'il est approprié pour être utilisé avec une cassette à bande (24) dont la partie épaissie (32) est disposée sur les côtés opposés de ladite cassette à bande, lesdits moyens de mise en place (40, 41, 400, 401, 410, 411) comprenant des parties formant flancs (400, 401, 410, 411) pour se trouver le long des côtés opposés de ladite cassette à bande.

11. Appareil selon une revendication précédente quelconque, caractérisé en ce qu'il comprend une broche (15) fixée audit boîtier (11) et présentant une partie rotative (52) pour coopérer avec une bobine de ladite cassette à bande (24), lesdits moyens d'entraînement (62) étant prévus pour entraîner ladite partie rotative de ladite broche.

12. Appareil selon la revendication 11, caractérisé en ce qu'il comprend en outre:

des moyens de déplacement et d'actionnement (16, 75) prévus pour coopérer avec une autre bobine de ladite cassette à bande afin de faire tourner ladite autre bobine, au moins une première partie (75) des moyens de déplacement et d'actionnement pouvant tourner autour d'un axe et au moins une seconde partie (16) desdits moyens de déplacement et d'actionnement pouvant coulisser le long dudit axe;

des moyens (83) pour entraîner ladite première partie en rotation;

et des moyens (59, 48, 49, 50, 66, 62, 62, 80, 81, 82) pour amener lesdits moyens d'entraînement en rotation à faire tourner ladite première partie lorsque ladite seconde partie est coulissée dans une direction.

13. Appareil selon une revendication précédente quelconque, caractérisé en ce que:

ledit boîtier (11) a des dimensions telles qu'une cassette à bande (24) se trouvant dans ledit espace de réception de cassette (14) s'étend au-delà dudit boîtier dans au moins une direction.

14. Appareil selon la revendication 13, comprenant:

des moyens disposés dans ledit boîtier pour former des signaux électriques en liaison avec les données se trouvant sur ladite bande;

des moyens de cassette à tuner (33) pouvant être disposés dans ledit espace de réception de bande dudit boîtier et ayant des dimensions telles que lesdits moyens de cassette à tuner ne s'étendent pas au-delà dudit boîtier, afin de recevoir des ondes radio et de former des signaux électriques en liaison avec les ondes choisies; et

des moyens pour relier ensemble lesdits moyens de cassette à tuner et lesdits moyens de formation.

15. Appareil selon la revendication 14, caractérisé en ce que lesdits moyens de cassette à tuner (33) comprennent des moyens de commande (34) pouvant être disposés dans ledit espace de réception de cassette (14) et accessibles lorsque lesdits moyens de cassette à tuner sont disposés dans ledit espace de réception de cassette.

16. Appareil selon la revendication 12 ou l'une quelconque des revendications 13 à 15 dans leur dépendance de la revendication 12, caractérisé en ce que lesdits moyens (62) pour entraîner ladite partie rotative (52) de ladite broche (15), lesdits moyens de déplacement et d'actionnement (16, 75), lesdits moyens (83) pour faire tourner ladite première partie (75) et lesdits moyens d'amenée (59, 48, 49, 50, 66, 62, 61, 80, 82) sont tels que ladite broche peut être entraînée en rotation de manière sélective dans une direction opposée à la direction dans laquelle lesdits moyens de rotation (83) entraînent en rotation ladite première partie.

17. Appareil selon la revendication 16, caractérisé en ce que lesdits moyens de rotation de la première partie, lesdits moyens d'amenée et lesdits moyens de rotation de la broche comprennent:

un volant (59);

un premier moyen de transfert d'énergie (66, 61, 63, 62, 48) pour transférer de manière sélective de l'énergie depuis ledit volant vers ladite broche (15); et

un second moyen de transfert d'énergie (66, 61, 49, 50, 81, 82) pour transférer de manière sélective de l'énergie depuis ledit volant vers ladite première partie (75).

18. Appareil selon la revendication 17, caractérisé en ce que lesdits premier et second moyens de transfert d'énergie comprennent:

de premier, second et troisième engrenages (48, 49, 50) montés concentriquement et fixés l'un par rapport à l'autre;

un quatrième engrenage (66) venant en prise avec ledit volant (59);

un troisième moyen (61, 63, 62) permettant de transférer de l'énergie depuis ledit quatrième engrenage vers ledit premier engrenage (48) et depuis ledit premier engrenage vers ladite broche (15) pendant un certain mode de fonctionnement dudit appareil; et

un quatrième moyen (61, 80, 81, 82) pour tranférer de l'énergie depuis ledit quatrième engrenage vers ledit second engrenage (49) et depuis ledit troisième engrenage (50) vers ladite première partie (75) desdits moyens de déplacement et d'actionnement lorsque ladite seconde partie (16) desdits moyens de déplacement et d'actionnement coulisse dans ladite direction donnée.

19. Appareil selon la revendication 18, caractérisé en ce que lesdits premier, second et troisième engrenages (40, 49, 50) sont concentriques à ladite broche (15) et audit troisième moyen (61, 63, 62), et en ce qu'il est prévu des moyens (84) pour déplacer axialement lesdits premier, second et troisième engrenages afin de venir en prise avec ladite broche.

20. Appareil selon la revendication 18 ou 19, caractérisé en ce que ledit troisième moyen comprend:

un cìnquième engrenage (62) pouvant venir en prise avec ledit premier engrenage (48); et

des moyens (61, 63) pour transférer une partie de force prédéterminée depuis ledit quatrième engrenage (66) vers ledit cinquième engrenage;

21. Appareil selon la revendication 2 ou l'une quelconque des revendications 3 à 20 dans leur dépendance de la revendication 2, caractérisé en ce que ledit couvercle (12) est articulé le long d'un premier bord audit boîtier (11), et en ce que l'appareil comprend en outre:

une porte (21) articulée à un second bord dudit couvercle à l'opposé dudit premier bord; et

des moyens (23) pour pousser ladite porte à s'étendre transversalement à une ouverture vers ledit espace de réception de cassette dudit boîtier, ladite porte étant amenée à pivoter depuis la position transversale à ladite ouverture lorsqu'une cassette à bande (24) est insérée dans ledit espace de réception de cassette.

22. Appareil selon la revendication 20, caractérisé en ce qu'il existe une broche supplémentaire (16) pour coopérer avec une autre bobine de ladite cassette à bande (24), lesdites broches étant prévues pour coopérer avec deux trous (25, 26) prévus dans ladite cassette à bande, ladite porte (21) comprenant une zone découpée (22) pour éviter lesdites broches lorsque ladite porte est amenée à pivoter par l'insersion de ladite cassette à bande.

# FIG. 1.

# FIG. 2.

FIG.3.

FIG.4.

FIG.5.

FIG.6.

FIG. 7.

FIG. 8.

(a)

(b)

FIG.9

FIG.10.